**Europäisches Patentamt**

**European Patent Office**

**Office européen des brevets**

(11) Publication number: **0 176 306 B1**

# EUROPEAN PATENT SPECIFICATION

(45) Date of publication of patent specification: **20.12.89**

(21) Application number: **85306591.0**

(22) Date of filing: **17.09.85**

(51) Int. Cl.⁴: **B 29 B 7/90, C 08 L 31/04, C 08 K 5/12, B 29 C 67/24, B 29 C 43/24 // B29K31:00**

(54) Method of manufacturing for vibration damping materials.

(30) Priority: **22.09.84 GB 8424048**
**13.05.85 GB 8512085**
**14.02.85 US 701505**

(43) Date of publication of application:
**02.04.86 Bulletin 86/14**

(45) Publication of the grant of the patent:
**20.12.89 Bulletin 89/51**

(84) Designated Contracting States:
**BE DE FR IT NL SE**

(56) References cited:
**EP-A-0 100 066**
**DE-A-3 045 747**
**GB-A- 741 001**
**GB-A- 797 630**
**GB-A-1 310 241**

(73) Proprietor: **WARDLE STOREYS PLC**
**Grove Mill Earby**
**Colne Lancashire BB8 6UT (GB)**

(72) Inventor: **Grunwell, Walter**
**Laneside Farm Wigglesworth**
**Skipton North Yorkshire (GB)**

(74) Representative: **Knott, Stephen Gilbert et al**
**MATHISEN, MACARA & CO. The Coach House**
**6-8 Swakeleys Road**
**Ickenham Uxbridge Middlesex UB10 8BZ (GB)**

Courier Press, Leamington Spa, England.

## Description

The invention relates to the manufacture of vibration damping and sound insulating materials.

Coatings of mineral fillers bound with resinous or polymeric materials are commonly used on metal sheet structures to reduce noise, particularly where this arises from the resonant nature of the structure. These coatings are normally termed vibration damping materials and are applied to the required surfaces either as a paint or a sheet by means of an adhesive. Such coatings are found also to provide a degree of sound insulation. The sound insulating efficiency of these materials is particularly related to the thermoelastic and viscous properties of the resinous or polymeric binder, but the choice of mineral filler is also important. Polymers of vinyl acetate and related copolymers are known to have exceptionally high internal damping characteristics and are, therefore, a known choice for formulating such materials.

The temperature range over which these materials are effective in providing sound insulation is a function of the softness. The softness of materials containing vinyl acetate polymers and copolymers is readily adjusted by the use of plasticisers such as are used with nitrocellulose. An example of such a plasticiser is a low molecular weight phthalate plasticiser because they have been found generally compatible with vinyl acetate polymers and copolymers.

Since vinyl acetate polymers and copolymers are readily dissolved in polar solvents, vibration damping materials made from such polymers and copolymers are generally produced as paints for direct application or as solutions for the casting of sheet materials. Some vinyl acetate polymers and copolymers are dispersable in water as emulsions which can also be used for the production of vibration damping materials in the form of paints and cast sheets.

There have also been proposals to produce sheets of sound insulating material by thermoplastic processing of certain relatively easily worked copolymer materials containing vinyl acetate, such as indicated in GB—A—1310241. However, because of the melt characteristics of vinyl acetate alone, the use of highly filled vinyl acetate homopolymers has not generally been considered suitable for producing thick sheets or other profiles by thermoplastic processing such as calendering.

According to the invention, there is provided a method of manufacturing a polymeric, profiled sheet material for vibration damping and sound insulation, comprising mixing a homopolymer of vinyl acetate having a molecular weight between K60 and K80 with a filler and a plasticiser and heating the mixture to a temperature of from 170°C to 190°C, and then calendering the mixture to produce a profiled sheet product using calender rolls heated to a temperature of from 60°C to 120°C.

It has been found that by formulating a filled vinyl acetate homopolymer mixture which can be calendered and then producing a profiled sheet product by a calendering process, the resultant product has a greatly increased sound insulation performance as compared with similar products produced by painting or casting techniques. This is believed to be due to the fact that the mixing and calendering process gives a high degree of dispersion of the components of the mixture within the product. In addition, the calendering process has the advantage of not requiring the use of solvents (with their attendant need to conform to pollution control regulations) or of water, the removal of which requires the expenditure of quantities of energy, which can be expensive. The polyvinyl acetate product is non-toxic.

It has been found that the product may be calendered directly as an unsupported sheet as thin as 600 μm grade.

Such sheet material, compared with supported materials, has many advantages regarding handleability and ease of conversion, e.g. by lamination, cutting, pressure sensitive adhesive application.

The vinyl acetate homopolymer has a molecular weight between K60 and K80, and is selected according to the particular vibration damping properties required.

An extender resin may be mixed, in weight ratio of up to 1:5, with the vinyl acetate homopolymer. This resin may be another vinyl resin, oxidized bitumen or pitch, or a mixture thereof with an ethylene polymer.

The plasticiser is preferably one conventionally used for the production of nitro-cellulose, i.e. a high solvating plasticiser, for example a phthalate ester such as dibutyl or butyl benzyl phthalate. The amount of plasticiser used depends on the type of vibration damping material to be be produced and on the temperature range over which the vibration damping material is required to operate. The amount will normally comprise from 4% to 9% by weight of the total composition.

The filler content is preferably from 50% to 80% by weight of the total composition, and preferably the filler comprises a mixture of clay and micaceous minerals.

It has been found advantageous to include in the composition additives for the purposes of lubrication, stabilization and/or pigmentation.

The constituents of the mixture are selected and formulated to give a certain required vibration damping performance in the product, and to provide certain procesability characteristics for a calendering operation.

Vibration damping performance, discussed in greater detail below, may be assessed using the method given in British Standard Au 125:1966. The noise decay rate at ambient temperature can be expected to lie between 5 db/sec and 20 db/sec for material having a weight of 1 kg/cm$^2$.

Processability in a calendering process is assessed by thermomechanical analysis and indentation measurements. The latter is described in British Standard 3260. Preferred compositions have glass-transition temperatures below 10°C and progressively soften up to 200°C. Indentation values lie within the range 0.5 mm and 1.0 mm (0.02 inch and 0.04 inch) at 25°C.

The following is a description of a preferred embodiment of the invention, given by way of example only.

Example 1

The following are mixed together in the gravimetric proportions shown:—

|  | per cent |
| --- | --- |
| Polyvinyl acetate (PVA) (molecular weight K70) | 24 |
| Butyl benzyl phthalate (plasticiser) | 6 |
| Lubricant | 1 |
| Slate powder (mineral filler) | 53 |
| Mica (mineral filler) | 16 |

The selected constituents are blended until well dispersed. The blended material is then transferred to a high intensity or continuous mixer where it is heated to a temperature within the range 170°C to 190°C.

The heated mass is then fed to a calender, or series of calenders, operating in the 2-roll mode. The calender roll temperatures are set at temperatures within the range of 60° to 120°C, preferably 60°C to 80°C.

The gap between the calender rolls is set according to the thickness of sheet required to give a weight of 1 kg/m$^2$.

The sheet emerging from the calender is cooled and either wound into a roll for further processing or cut into panels of a required size. The roll of sheet material may be used directly or converted into self-adhesive rolls or sheets as required.

In one test according to this Example, the blended material was heated to 180°C in a continuous mixer, and fed to a 2-roll calender with roll temperatures set at 80°C and 60°C. The calender speed was 10 m/min. The finished sheet was cooled and cut into panels. These panels were tested according to British Standard AU 125:1966. They gave a noise decay rate of 16 decibels/sec at 16°C. The decay rate of a comparable material made by the casting process is 11 decibels at the same temperature.

Example 2

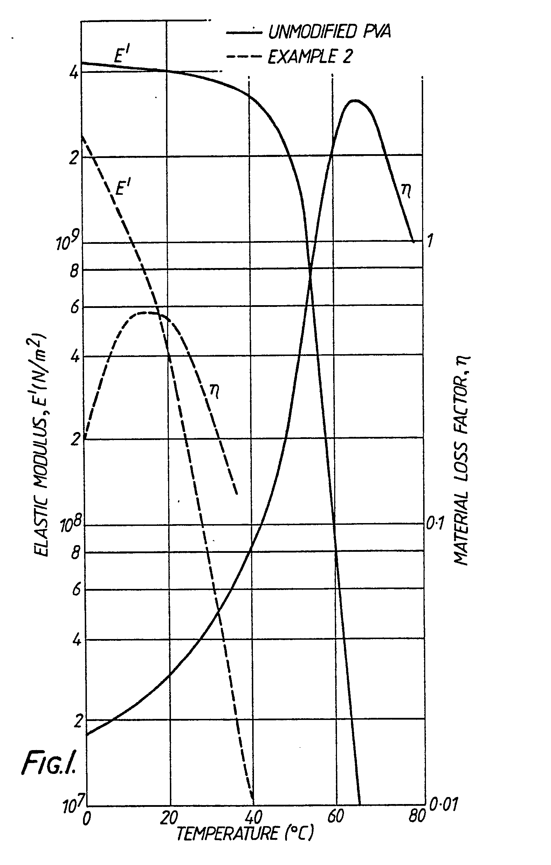

A sheet was calendered using the method of Example 1, to a weight of 1.25 kg m$^{-2}$ and a thickness of 0.6 mm, and was tested for suitability as a vibration damping sheet material for use in automobiles. The properties of the material, and the tests applied, will now be described in detail with reference to Figures 1 to 7 of the accompanying drawings, in which:

Figure 1 is a graph of the variation with temperature of the elastic modulus and the material loss factor of unmodified PVA and of the material of Example 2;

Figure 2 is a graph of decay rate against temperature, in accordance with a standard bar test;

Figure 3 is a graph of decay rate against temperature, in accordance with a Geiger plate test;

Figure 4 is a graph of composite loss factor against temperature in accordance with a complex modulus test;

Figure 5 is a graph of composite loss factor against the ratio of the thickness of sheet material of Example 2 to the thickness of steel to which it is bonded, at 20°C and 200 Hz;

Figure 6 is a graph of composite loss factor against frequency of vibration (Hz); and

Figure 7 is a graph of decay rate against temperature for different methods of fixing of the sheet material, illustrating the effect of the fixing adhesive.

Assuming that the damping material will be attached to the surface of a vibrating panel, those physical properties, important for its function can be highlighted. The basic requirement is for the maximum amount of vibration energy to be removed from the panel, and then as much of that extracted energy as possible to be converted into a less innocuous form, e.g. heat.

Consider the simple case of a single movement of the panel causing static deformation of the damping material. The ratio of the applied stress (σ) to the resultant strain (ε) defines the material's Elastic Modulus (E) or

$$\sigma = E\varepsilon$$

Thus to maximise the stress necessary to produce deformation, and hence maximise the panel energy utilised, the damping material must have a high Elastic Modulus.

When dynamic loading is applied to the material, in the form of vibratory movement, internal friction (viscous loss) resists the existing force. To take this into account the Modulus of Elasticity must be expressed in complex form, i.e.

$$E^* = E' + jE''$$

where:
E* = Complex Modulus of Elasticity
E' = Elastic Modulus
E'' = Loss Modulus
j = $\sqrt{-1}$

The material loss factor η which is a property that can be readily measured, is defined as the ratio E''/E' and so the above expression can be rewritten

$$E^* = E'(1 + j\eta)$$

It is now obvious that not only is it important for the damping material to possess a high Elastic Modulus but also its Loss Modulus or Loss Factor must be high in order to maximise energy conversion through internal friction. Materials of this type are termed visco elastic.

Under certain conditions, PVA exhibits the required visco-elastic nature, and is non-toxic.

Like most plastics, PVA undergoes phase changes as its temperature is increased. At low temperatures it is hard and brittle like glass. Above a certain temperature, namely the freezing point, it gradually softens, but still retains the character of a solid material through a temperature range known as the 'transitional phase'. As the temperature is increased further it becomes extremely weak and takes on a rubbery behaviour until finally it begins to flow freely and becomes liquid in the real sense of the term.

In the transitional phase the material remains tough and displays visco-elastic properties. When it is deformed and hence stressed (the Elastic Modulus determines the magnitude of the stress) molecular rearrangement processes take place to reduce the stress, whilst the deformation remains constant. This causes a large part of the molecular energy to be converted into heat. (The Loss Modulus is a measure of the material's capability for energy conversion).

Figure 1 shows the variation in Elastic Modulus and Loss Factor for unmodified PVA, as a function of the main influencing parameter, namely temperature. The 'transitional phase' is symbolised by the sharp fall off in Elastic Modulus (a sign of progressive softening) and the rise in Loss Factor which passes through a maximum. Maximum effect as a vibration damping material is at temperatures where both Elastic Modulus and Loss Factor are high, i.e. between 50°C and 60°C. PVA alone is of little practical use since not only is the effective temperature range very narrow, it does not contain the normal environmental temperatures encountersd in the end use.

Fortunately, the position and size of the effective region can be modified to a great extent through the selected use of plasticizers and fillers. Plasticising serves to lower the temperature range over which the transitional phase predominates. It can also have the effect of expanding the phase i.e. making the decline in Elastic Modulus more gradual and broadening the Loss Factor Maximum. The latter effect can be intensified with the addition of fillers. However, the maximum value of Loss Factor decreases as the breadth of the peak increases, so there is a compromise between maximum damping and breadth of the effective temperature range.

The formulation of Examples 1 and 2 is tailored to give maximum damping at normal room temperatures. Figure 1 gives the variation with temperature of Elastic Modulus and Loss Factor of this material. The effect of additives on the PVA can be seen clearly by comparison with the curves for the basic polymer. The high values of Elastic Modulus and Loss Factor in the range 0—30°C show the suitability of the standard product as a vibration damping material for ambient conditions. Other temperature ranges could be catered for by developing the formulation accordingly.

A fundamental requirement of a vibration damping material is a measure of its performance, so that a judgement can be made of its effect in situ. It is important to realise, when considering the fitted performance, that the effectiveness of a vibration damping material is not only decided by the characteristics of the product itself, it also depends on the panel to which it is attached. It can be influenced by the inherent damping of the panel, in that a particular material will have a greater effect in reducing vibrations in a very lightly damped panel than in one already possessing some degree of damping. The performance is also dependendant on the mode of vibration or mode shape of the panel under operating conditions. A damping material, because its energy absorbing action is related to flexural stressing, will be more effective the more pronounced the mode shape of the panel. (The mode shape is dictated by panel geometry and boundary conditions). Following on from this point, if the panel is only partially covered with damping material, its performance can be affected by its position relative to the panel mode shape, i.e. better results will be achieved if it covers all areas of maximum flexure, than if it is situated near nodal points.

Thus, although the elastic modulus and loss factor of the vibration damping material may be known, corresponding to the appropriate frequency and temperature range, this can not be regarded as a measure of its performance when attached to a panel. It is possible, in very simple cases, to determine the fitted performance theoretically. Such calculations form the basis of laboratory determinations of loss factor and elastic modulus for non-rigid materials. These materials, Example 2 being an example of the type, are tested when attached to steel bars of simple geometry. However, the geometry and boundary conditions of a typical automobile body panel are far from simple and thus the only accurate method of determining the performance of combined panel and damping material is by direct measurement of the composite response.

In order to establish standard performance specifications, and examine the relative effectiveness of different materials, it is necessary to have readily reproducable laboratory tests. Many such tests exist, each one highlighting a particular aspect, e.g. speed of testing, suitability for specific material types, ability to measure variation in performance with frequency/thickness/temperature etc. The sample configurations and test methods can each be divided into two categories:

Sample configuration

a) Sample attached to a metal plate vibrating at a specific resonant frequency while supported at nodal points.

b) Sample, either alone in the shape of the bar, or attached to a metal bar, clamped at one/both ends, enabling measurements to be made over a range of resonant frequencies.

## Test method

a) Decay Rate Method: An external exciting force at resonant frequency is removed and the decay in vibration amplitude measured, in dB/sec.

b) Frequency Response Method: A variable frequency sinusoidal force is applied to the sample and the amplitude of vibration is plotted as a function of frequency. The Loss Factor for a particular natural frequency is found from the position and width of the resonant peak.

Decay Rate and Loss Factor are related as follows:—

$$\eta = D/8.7 \, \pi \, f$$

where:

D=decay rate (dB/sec)

f=resonant frequency (Hz).

Brief details of three standard tests will now be given.

## Bar Test (BSAU 125)

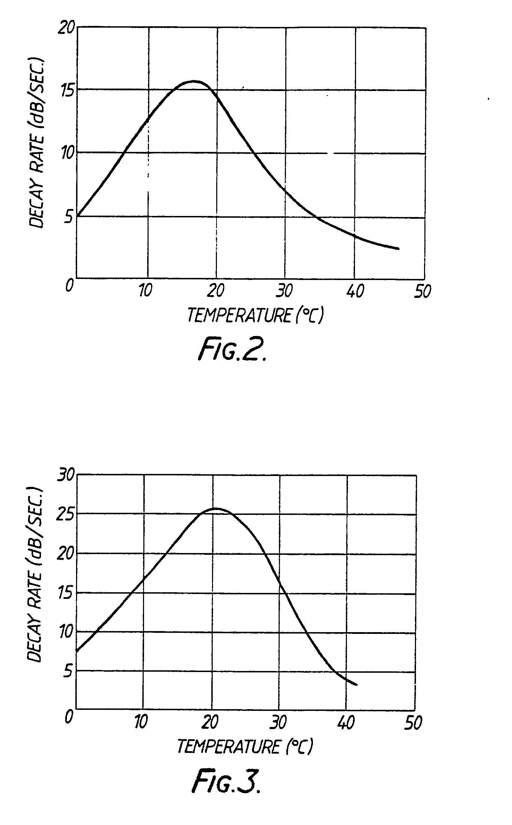

This test involves the measurement of the decay rate of a 0.25 in (6.4 mm) thick steel bar, with damping material attached, supported at nodal points at its fundamental frequency of 100 Hz. The variation in decay rate with temperature can be obtained by placing it in an environment cabinet. Figure 2 is a plot of decay rate versus temperature for bar plus the material of Example 2 (self adhesive). The curve has a broad peak with a maximum decay rate of 16 dB/sec., occuring at around 18°C.

## Geiger Plate Test

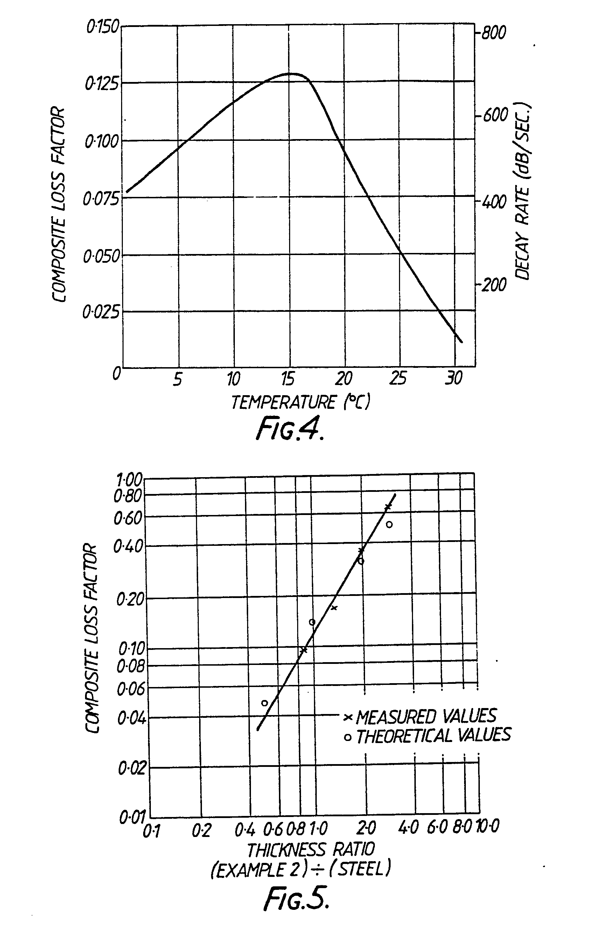

The arrangement is very similar to the Bar Test except that the panel to which the damping sheet is attached is a 20 in (50.8 cm) square plate, with a resonant frequency of around 160 Hz. Test results are given in Figure 3. The absolute values of decay rate differ from Figure 2 because of the different plate geometry, however the shape of the performance curve with respect to temperature is very similar.

## Complex Modulus Test

This applies the Frequency Response Method of measurement to a vertical specimen clamped at its upper end. The test is more versatile than the others described, since it enables damping measurements to be made over a range of frequencies as well as temperatures. It also uses a thin substrate, which could be considered more typical of an automobile body panel. In order to obtain generally representative data for Example 2, a 'mean' bar size was chosen of 280 mm×10 mm×1 mm. This also falls within the guidelines given in the only standard Test Method that could be found, namely ASTM E756-80. The tests, on self-adhesive material according to Example 2, were carried out according to this method, with a test bar of mild steel.

Figure 4 is a plot of Composite Loss Factor Versus temperature. The equivalent Decay Rates have beenn the vertical axis. A broad peak is again observed. The absolute performance is very much higher than in the results from the Thick Bar and Geiger Plate. This is mainly due to the damping sheet thickness being much greater, relative to that of the substrate bar, in the Complex Modulus Test.

The importance of thickness ratio can be seen in the following expression, which comes from the classical analysis for bars, making appropriate assumptions and ignoring very small terms.

$$\eta_c = \frac{\eta_1 \cdot MT \, (3+6T+4T^2)}{1+MT \, (5+6T+4T^2)} \qquad (1)$$

where:

$\eta_c$=Composite Loss Factor (damping material+bar)

$\eta_1$=damping material Loss Factor

M=Elastic Modulus ratio=$E_1/E$

$E_1$=Elastic Modulus of damping material

E=Elastic Modulus of bar

T=Thickness Ratio=$H_1/H$

$H_1$=damping material thickness

H=bar thickness

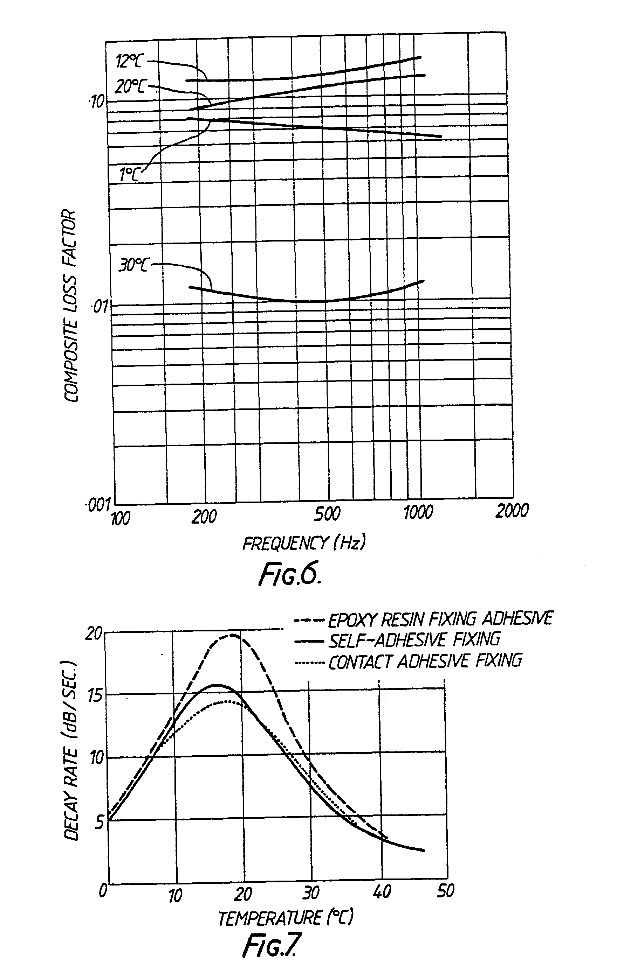

The relationship between Composite Loss Factor and damping sheet/bar thickness ratio was determined experimentally by testing various thicknesses of the material of Example 2. The result is shown in Figure 5. That predicted by expression (1) is also plotted, and as might be expected, there is close agreement.

The effect of vibration frequency on Composite Loss Factor was investigated by carrying out measurement at different resonances of the bar. This was done at four temperatures and the results are presented graphically in Figure 6.

It can be seen that over normal operating conditions the performance of the material of Example 2 is fairly independent of frequency.

For maximum effect when fixed directly to a panel, a damping material should undergo the same flexural strains as the panel surface. The fixing method will thus affect composite damping performance, since any deformation taking place within an adhesive layer will reduce the strain produced in the damping sheet.

The effect of the type of adhesive fixing used with the material of Example 2 was examined with the Standard Bar Apparatus. Figure 7 gives Decay Rate as a function of temperature, using three types of adhesive systems. As might be expected, highest results were achieved with a structural type of adhesive (epoxy resin), with the semi-solid contact type adhesive and the standard pressure sensitive self-adhesive giving similar results.

Thus in terms of obtaining the ultimate performance from the material the adhesive fixing system should be as stiff as possible. However

when considering practical fixing methods for automotive applications, self-adhesive systems are most highly rate. In the case of Example 2, its inherent performance is such that high Decay Rates are achieved even in its self-adhesive form.

The material of Example 2 effectively damps out resonant vibrations in the gauge of metal used for most automobile body panels e.g. doors, roof, wings, bonnet (hood) and boot (trunk) lids etc. On thicker panels, like a floorpan, or in areas where the level of vibration is particularly high, a slightly thicker sheet may be required (1 mm thickness, 2.0 Kg/m² weight).

Complete coverage of a panel is not necessary. A small pad located near the centre of the unrestrained area is usually sufficiently effective.

Because of its lightness, the form of sheet material which offers most potential in the automobile industry is in conjunction with a self-adhesive fixing system. This eliminates the need for a separate, usually solvent based, adhesive. It enables parts to be easily fitted to vertical surfaces, or to the underside of horizontal surfaces, and gives a permanent bond without any post curing. Using a high temperature self-adhesive system parts can be fitted prior to initial paint stoving if necessary, where body panels might be more easily asscessible than on the fonal assembly line.

PVA is a thermoplastic material and as such, when laid on horizontal surfaces, sheets will tend to conform to underlying contours when hot. An investigation using the material of Example 2 and a hot melt adhesive, produced samples conformed to a swaged panel with heating conditions of 190°C for 5 mins.

## Claims

1. A method of manufacturing a polymeric, profiled sheet material for vibration damping and sound insulation, comprising mixing a homopolymer of vinyl acetate having a molecular weight between K60 and K80 with a filler and a plasticiser and heating the mixture to a temperature of from 170°C to 190°C, and then calendering the mixture to produce a profile sheet product using calender rolls heated to a temperature of from 60°C to 120°C.

2. A method according to claim 1, in which the mixing step includes an extender resin in a weight ratio to the vinyl acetate homopolymer of up to 1:5.

3. A method according to any one of the preceding claims, in which the plasticiser is a high solvating plasticiser.

4. A method according to claim 3, in which the plasticisar is a phthalate ester.

5. A method according to any one of the preceding claims, in which the weight of plasticiser used is from 4% to 9% of the weight of the total composition.

6. A method according to any one of the preceding claims, in which the filler is a mixture of clay and micaceous minerals.

7. A method according to any one of the preceding claims, in which the filler content by weight in the total composition is from 50% to 80%.

8. A method according to claim 1, in which the mixing step comprises:

(a) blending the following constituents until well dispersed:

24 wt. % polyvinyl acetate homopolymer;

6 wt. % butyl benzyl phthalate, as the said plasticiser;

1 wt. % lubricant;

53 wt. % slate powder, as part of the said filler; and

16 wt. % mica, as the remainder of said filler; and

(b) transferring the blended mixture to a continuous mixer in which it is further mixed and heated to the temperature of between 170°C and 190°C.

**Patentansprüche**

1. Verfahren zur Herstellung eines polymeren, profilierten Plattenmaterials zur Schwingungsdämpfung und Schallisolierung, umfassend das Vermischen eines Vinylacetat-Homopolymeren mit einem Molekulargewicht zwischen K60 und K80 mit einem Füllstoff und einem Weichmacher und Erwärmen der Mischung auf eine Temperatur von 170—190°C und danach das Kalandrieren der Mischung zur Herstellung eines profilierten Plattenprodukts unter Verwendung von auf eine Temperatur von 60°C—120°C erwärmten Kalanderwalzen.

2. Verfahren nach Anspruch 1, wobei die Mischungsstufe ein Streckharz in einem Gewichtsverhältnis bezüglich dem Vinylacetat-Homopolymer von bis zu 1:5 beinhaltet.

3. Verfahren nach einem der vorangehenden Ansprüche, wobei der Weichmacher ein hochsolvatisierender Weichmacher ist.

4. Verfahren nach Anspruch 3, wobei der Weichmacher ein Phthalatester ist.

5. Verfahren nach mindestens einem der vorangehenden Ansprüche, wobei das Gewicht des verwendeten Weichmachers 4—9% des Gewichts der gesamten Zusammensetzung beträgt.

6. Verfahren nach mindestens einem der vorangehenden Ansprüche, wobei der Füllstoff eine Mischung aus Ton und Glimmermineralien ist.

7. Verfahren nach mindestens einem der vorangehenden Ansprüche, wobei der Füllstoffgehalt, bezogen auf das Gewicht der gesamten Zusammensetzung, 50—80% beträgt.

8. Verfahren nach Anspruch 1, wobei die Mischstufe umfaßt:

a) Mischen der folgenden Bestandteile, bis diese gut dispergiert sind:

24 Gew.-% Polyvinylacetat-Homopolymer;

6 Gew.-% Butylbenzylphthalat als Weichmacher;

1 Gew.-% Gleichmittel;

53 Gew.-% Schieferpulver als Teil des Füllstoffs; und 16 Gew.-% Glimmer als restlicher Füllstoff; und

b) übertragen der Mischung in einen kontinuierlichen Mischer, in dem diese weitergemischt und auf die Temperatur zwischen 170 und 190°C erhitzt wird.

## Revendications

1. Procédé de fabrication d'un matériau en feuille profilé, polymère, pour l'amortissement des vibrations et l'insonorisation, caractérisé en ce qu'il comprend le mélange d'un homopolymère d'acétate de vinyle ayant un poids moléculaire compris entre K60 et K80 avec une charge et un plastifiant, et le chauffage du mélange à une température de 170 à 190°C, puis le calandrage du mélange pour donner un produit en feuille profilé en utilisant des cylindres de calandre chauffés jusqu'à une température de 60 à 120°C.

2. Procédé suivant la revendication 1, caractérisé en ce que la phase de mélange comprend une résine de dilution dans un rapport en poids vis-à-vis de l'homopolymère d'acétate de vinyle allant jusqu'à 1/5.

3. Procédé suivant l'une quelconque des revendications précédentes, caractérisé en ce que le plastifiant est un plastifiant à solvatation élevée.

4. Procédé suivant la revendication 3, caractérisé en ce que le plastifiant est un ester phtalate.

5. Procédé suivant l'une quelconque des revendications précédentes, caractérisé en ce que le poids du plastifiant utilisé va de 4 à 9% du poids de la composition totale.

6. Procédé suivant l'une quelconque des revendications précédentes, caractérisé en ce que la charge est un mélange d'argile et de minéraux micacés.

7. Procédé suivant l'une quelconque des revendications précédentes, caractérisé en ce que la teneur en charge en poids dans la composition finale est de 50 à 80%.

8. Procédé suivant la revendication 1, caractérisé en ce que la phase de mélange comprend:

a) le mélange des constituants suivants jusqu'à ce qu'ils soient bien dispersés:

24% en poids d'homopolymère d'acétate de vinyle;

6% en poids de butyl benzyl phtalate, à titre de plastifiant;

1% en poids de lubrifiant;

53% en poids d'une poudre d'ardoise, à titre d'une partie de la charge; et

16% en poids de mica, à titre de restant de cette charge; et

(b) le transfert du mélange ainsi trituré dans un mélangeur à fonctionnement continu, où il est encore mélangé et chauffé jusqu'à une température comprise entre 170 et 190°C.

Fig.I.

FIG.2.

FIG.3.

FIG.4.

FIG.5.

3

FREQUENCY (Hz)

FIG.6.

--- EPOXY RESIN FIXING ADHESIVE
— SELF-ADHESIVE FIXING
······ CONTACT ADHESIVE FIXING

TEMPERATURE (°C)

FIG.7.

4